# EUROPÄISCHE PATENTANMELDUNG

(11) **EP 4 660 255 A1**
(43) Veröffentlichungstag der Anmeldung: **10.12.2025**
(21) Anmeldenummer: 24180005.1
(22) Anmeldetag: 04.06.2024
(51) Int. Cl.: C09C 3/08, C09B 67/20, C09D 17/00

(54) **WÄSSRIGE PIGMENTPASTE, KIT-OF-PARTS BESCHICHTUNGSSYSTEM, ENTHALTEND DIE WÄSSRIGE PIGMENTPASTE, ABGETÖNTES WÄSSRIGES BESCHICHTUNGSSTOFFSYSTEM, ERHALTEN AUS DEM KIT-OF-PARTS BESCHICHTUNGSSYSTEM, UND VERFAHREN ZUM ABTÖNEN EINER WÄSSRIGEN BESCHICHTUNGSMASSE SOWIE VERWENDUNG DER WÄSSRIGEN PIGMENTPASTE UND DES WÄSSRIGEN BESCHICHTUNGSSTOFFSYSTEMS**

(71) Anmelder: DAW SE, 64372 Ober-Ramstadt (DE)
(72) Erfinder: WISCHHUSEN, York, 64354 Reinheim (DE); HOTTES, Gabi, 64354 Reinheim (DE); PTATSCHEK, Volker, 63773 Goldbach (DE); DELP, Ingo, 64401 Groß-Bieberau (DE); HEROLD, Christian, 97082 Würzburg (DE); WIESE-EDELMANN, Barbara, 04668 Grimma (DE)
(74) Vertreter: Michalski Hüttermann & Partner Patentanwälte mbB

(57) **Zusammenfassung**

Die Erfindung betrifft eine wässrige Pigmentpaste, enthaltend a) ein organisches und/oder anorganisches Pigment, b) mindestens einen Hilfsstoff, wie Lävulinsäure oder Caprylhydroxamsäure, und c) Wasser, wobei die wässrige Pigmentpaste einen pH-Wert im Bereich von 4,0 bis 6,5 aufweist. Die Erfindung betrifft ferner ein Kit-of-parts Beschichtungssystem, enthaltend oder gebildet aus A) mindestens einer erfindungsgemäßen wässrigen Pigmentpaste und B) mindestens einer wässrigen Beschichtungsmasse, sowie ein abgetöntes wässriges Beschichtungsstoffsystem, erhältlich aus dem Kit-of-parts Beschichtungssystem durch Vermischen der wässrigen Pigmentpaste A) mit der wässrigen Beschichtungsmasse B). Außerdem betrifft die Erfindung ein Verfahren zum Abtönen einer wässrigen Beschichtungsmasse sowie die Verwendung der erfindungsgemäßen wässrigen Pigmentpaste zum Einfärben wasserbasierter Farben, Lacke, Lasuren, Putze und/oder Spachtelmassen.

## Beschreibung

Die vorliegende Erfindung betrifft eine wässrige Pigmentpaste. Außerdem betrifft die Erfindung ein Kit-of-parts Beschichtungssystem, enthaltend die erfindungsgemäße wässrige Pigmentpaste. Auch betrifft die Erfindung eine abgetöntes wässriges Beschichtungsstoffsystem, erhalten oder erhältlich aus dem erfindungsgemäßen Kit-of-parts Beschichtungssystem. Darüber hinaus betrifft die Erfindung ein Verfahren zum Abtönen einer wässrigen Beschichtungsmasse. Schließlich betrifft die Erfindung die Verwendung der erfindungsgemäßen wässrigen Pigmentpaste und des erfindungsgemäßen wässrigen Beschichtungsstoffsystems.

Wässrige Pigmentpasten haben regelmäßig für eine bestimmte Zeitdauer lagerstabil zu sein. Weder während der Herstellung, der Abfüllung oder während des Transports noch während des Anbietens zum Verkauf oder der Lagerung bis zur Nutzung darf eine Beeinträchtigung durch zum Beispiel mikrobiellen Befall stattfinden. Pigmentpasten sind jedoch regelmäßig schon deshalb besonders anfällig für einen Befall mit Mikroorganismen, als sie in Point-of-Sale-Abtönanlagen zum Einsatz kommen und dort nach erstmaliger Nutzung in den Vorratsbehältern der Abtönanlage für einen längeren Zeitraum den Umgebungsbedingungen ausgesetzt sind.

Aus diesem Grund werden viele Pigmentpasten mit Konservierungsmitteln, beispielsweise auch bekannt als Topf- und Filmkonservierungsmittel, versetzt. Als Konservierungsmittel für die Topfkonservierung von Pigmentpasten finden unter anderem Isothiazolinonderivate, Formaldehyd und formaldehydabspaltende Speicherformen sowie Pyrithion-Verbindungen Anwendung. Nicht alle der verfügbaren Konservierungsmittel sind für wässrige Pigmentpasten uneingeschränkt geeignet. Auch sind einige Konservierungsmittel für wässrige Pigmentpasten nur gegen ein limitiertes Keimspektrum wirksam oder weisen eine vom pH-Wert abhängige Wirksamkeit oder Stabilität auf. Einigen Konservierungsmitteln für wässrige Pigmentpasten haftet der Nachteil an, für Allergiker gegebenenfalls problematisch zu sein. Aus diesem Grunde hat es nicht an Versuchen gefehlt, auf derartige herkömmliche Konservierungsmittel komplett verzichten zu können. Hierbei ist man auf wässrige Pigmentpasten gestoßen, die nicht zuletzt aufgrund ihrer hohen pH-Werte biozid wirken und daher ohne die herkömmlichen Konservierungsmittel ausreichend lagerstabil sein sollen. So geht beispielsweise aus der DE 10 2018 004 943 A1 eine Pigmentpaste mit einem pH-Wert im Bereich von 10 bis 14 hervor, enthaltend 1 bis 75 Gew.% Pigment, 0,1 bis 10 Gew.% Silikonat, 0,5 bis 30 Gew.% Netzmittel und 15 bis 75 Gew.% Wasser. Auch die DE 10 2018 004 945 A1 stellt ab auf eine Pigmentpaste mit einem pH-Wert im Bereich von 10 bis 14, enthaltend 1 bis 75 Gew.% Pigment, 0,01 bis 10 Gew.% Alkanolamin, 0,5 bis 30 Gew.% Netzmittel und 15 bis 75 Gew.% Wasser. Ebenso schlägt die DE 10 2019 003 940 A1 eine Pigmentpaste mit einem pH-Wert im Bereich von 10 bis 14 vor, enthaltend 1 bis 75 Gew.% Pigment, 0,1 bis 10 Gew.% Aminosäure, 0,5 bis 30 Gew.% Netzmittel und 15 bis 75 Gew.% Wasser. Die vorangehend genannten Pigmentpasten sollen konservierungsmittelfrei über Zeiträume von mindestens sechs Monaten ohne jeglichen Qualitätsverlust und ohne Schädlingsbefall zum Abtönen eines Beschichtungsmittels in Farbmischautomaten einsetzbar sein. In der WO 2023/094379 A1 wird eine wässrige Pigmentpaste für Abtönsysteme mit einem besonders bevorzugten pH-Wert im Bereich von 10,2 bis 11,4 offenbart, enthaltend eine anorganische Verbindung eines dreiwertigen Metalls mit einer Löslichkeit von weniger als 5 g/l bei 20 °Cin Wasser, vorzugsweise Calciumaluminiumsulfat. Diese Pigmentpaste soll frei von Bioziden und Konservierungsmitteln sein und insbesondere eine Resistenz gegenüber alkaliphilen Bakterien, Hefen und Schimmelpilzen aufweisen.

Das Arbeiten mit wässrigen Beschichtungsstoffen, die mit einem hohen pH-Wert ausgestattet sind, kann allerdings zu Hautreizungen sowie trockener und rissiger Haut führen, beispielsweise bedingt durch eine Schädigung des Säureschutzmantels der Haut.

Der vorliegenden Erfindung lag daher die Aufgabe zugrunde, eine wässrige Pigmentpaste zur Verfügung zu stellen, der nicht mehr mit den Nachteilen des Stands der Technik behaftet ist und die insbesondere bei der Handhabung nicht mehr zu Hautreizungen führt bzw. die Gefahr von Hautreizungen verringert. Der vorliegenden Erfindung lag darüber hinaus insbesondere die Aufgabe zugrunde, solche wässrigen Pigmentpasten zur Verfügung zu stellen, die zusätzlich auch für Allergiker geeignet sind, über eine hinreichende Lagerstabilität verfügen und/ oder, insbesondere und, gute Verarbeitungseigenschaften, wie gute Abtöneigenschaften und gute Dosierfähigkeit über einen längeren Zeitraum, besitzen. Schließlich lag der vorliegenden Erfindung insbesondere auch die Aufgabe zugrunde, konservierungsmittelfreie wässrige Pigmentpasten zur Verfügung zu stellen, die in herkömmlichen Abtönanlagen, z.B. Point-of-Sale Abtönanlagen, zum Einsatz kommen.

Demgemäß wurde eine wässrige Pigmentpaste gefunden, bestehend aus oder enthaltend, insbesondere enthaltend,
a) mindestens ein organisches und/oder anorganisches Pigment,
b) mindestens einen Hilfsstoff, ausgewählt aus der Gruppe bestehend aus Lävulinsäure, wasserlösliche Salzen der Lävulinsäure, insbesondere Natriumlävulinat,
   Anissäure, wasserlöslichen Salzen der Anissäure, insbesondere Natriumanisat,
   Zimtsäure, wasserlöslichen Salzen der Zimtsäure,
   Kaffeesäure, wasserlöslichen Salzen der Kaffeesäure,
   1,2-Propandiol, 1,2-Pentandiol, 1,2-Hexandiol, 1,2-Octandiol,
   Mono- und Diestern, insbesondere Monoestern, des Glycerins mit gesättigten oder ungesättigten, insbesondere gesättigten, C6- bis C18-Fettsäuren, bevorzugt C8- bis C12-Fettsäuren, bevorzugt Capronsäure, Caprylsäure, Caprinsäure und/oder Laurinsäure, besonders bevorzugt Caprylsäure, wie Glycerolmonostearat, Glycerolmonopalmitat, Glycerolmonomyristat, Glycerolmonocaprylat oder Glycerolmonolaurat, insbesondere Glycerylmonocaprylat,
   Polyphenolen, insbesondere Honokiol, Propylhonokiol, Magnolol, Butylmagnolol, Obovatol,
   Gallussäure, Tannine, Epigallocatechin, Epigallocatechingallat, Catechol, Hinokiol, Thymol, Menthol, Eucalyptol, Geraniol, Carvacrol, Citral, Salicylsäuremethylester, Tocopherol, Extrakt der Rinde, Blüten und/oder Blätter des Magnolienbaumes,
   Glyceryl-Undecylenat,
   N-Hydroxyamiden von gesättigten oder ungesättigten, insbesondere gesättigten, C6-bis C18-Fettsäuren, insbesondere C8- bis C12-Fettsäuren, bevorzugt Capronsäure, Caprylsäure, Caprinsäure und/oder Laurinsäure, besonders bevorzugt Caprylsäure, wie Caprylhydroxamsäure (N-Hydroxyoctanamid), Caprinhydroxamsäure, Laurylhydroxamsäure, Palmitinhydxroxamsäure oder Stearylhydroxamsäure, insbesondere Caprylhydroxamsäure,
   1-Phenyl-1-propanol, Dipropylenglycole und
   beliebigen Mischungen der vorangehend genannten Verbindungen und
   c) Wasser sowie
   d) gegebenenfalls mindestens ein Additiv, insbesondere ausgewählt aus der Gruppe bestehend aus Entschäumern, Stabilisatoren, UV-Absorbern, Radikalfängern und Mischungen dieser Verbindungen, und/oder, insbesondere und,
   e) gegebenenfalls mindestens ein pH-Einstellmittel mit einem pKs kleiner 7,0, das kein Bestandteil der Komponenten b) und d) ist, bevorzugt Kaliumhydrogensulfat und/oder Natriumhydrogensulfat, besonders bevorzugt Kaliumhydrogensulfat,
   wobei die wässrige Pigmentpaste einen pH-Wert, bestimmt mit einer pH-Elektrode gemäß DIN EN ISO 19396-1-1:2022-05 bei 23 ± 2 °C, im Bereich von 4,0 bis 6,5, bevorzugt im Bereich von 4,5 bis 6,0, aufweist oder auf einen pH-Wert im Bereich von 4,0 bis 6,5, bevorzugt im Bereich von 4,5 bis 6,0, eingestellt ist. Als pH-Elektrode kann z.B. auf das Gerät Knick Portavo 902 pH der Firma Knick Elektronische Messgeräte GmbH & Co. KG, Berlin, Deutschland, zurückgegriffen werden.

In den erfindungsgemäßen wässrigen Pigmentpasten kommen bevorzugt Pigmente zum Einsatz, die ausgewählt sind aus der Gruppe bestehend aus anorganischen Pigmenten, insbesondere anorganischen Buntpigmenten, Schwarzpigmenten, Weißpigmenten und/oder Glanzpigmenten, organischen Pigmenten, insbesondere organischen Bunt- und/oder Schwarzpigmenten, und beliebigen Mischungen hiervon,

Als geeignete anorganische Weißpigmente kommen zum Beispiel Titandioxid, Zinkweiß, Farbenzinkoxid, Zinksulfid und/oder Lithopone und/oder Ettringit in Betracht. Unter den anorganischen Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau. Manganblau, Ultramarinviolett, Kobalt- und Manganviolett, Eisenoxidrot, Cersulfid, Molybdatrot, Ultramarinrot, Eisenoxidbraun, Mischbraun, Spinell- und Korundphasen, Chromtitangelb. Zinnzinktitanat. Chromorange. Eisenoxidgelb. Nickeltitangelb, Chromgelb und/oder Bismutvanadat

Besonders geeignete Pigmente umfassen zum Beispiel Titandioxid. Zinksulfid, Zinkoxid, Baryt, Ruß, Eisenoxid, Chromoxid, Kobaltblau, Spinellpigment, Nickeltitanat, Chromtitanat und deren beliebige Mischungen.

Als geeignete organischen Buntpigmente kann zum Beispiel zurückgegriffen werden auf C.I. Pigment Blue 15, C.I. Pigment Blue 15:1, C.I. Pigment Blue, 15:2, C.I. Pigment Blue 15:3, C.I. Pigment Blue 15:4. C.I. Pigment Blue 15:6, C.I Pigment Blue 16, C.I. Pigment Green 7, C.I. Pigment Green 36, C.I. Pigment Orange 36, C.I. Pigment Orange 43, C.I. Pigment Orange 73, C.I. Pigment Red 122, C.I. Pigment Red 168, C.I. Pigment Red 179, C.I. Pigment Red 188, C.I. Pigment Red 254. C.I. Pigment Red 264, C.I. Pigment Red 282, C.I. Pigment Violett 19. C.I. Pigment Violett 23, Pigment Yellow 74, Pigment Yellow 83, Pigment Yellow 97, C.I. Pigment Yellow 110, C.I. Pigment Yellow 138, C.I, Pigment Yellow 154 oder beliebige Mischungen dieser Pigmente.

Geeignete organische Pigmente können hierbei z.B. aus gewählt werden aus der Gruppe bestehend aus Monoazopigmenten, insbesondere C.I. Pigment Braun 25, C.I. Pigment Orange 5, 13, 38, oder 64, C.I. Pigment Rot 1, 2, 3, 4, 5, 8, 9, 12, 17, 22, 23, 31, 48: 1,48: 2, 48: 3, 49, 51: 1, 52: 1, 52: 2, 53, 53: 1, 53: 3, 57: 1, 58:2, 58: 4, 112, 146, 148, 170,175, 184,185, 187, 191: 1, 208, 210, 245, 247 und/oder 251, C,I. Pigment Gelb 1, 3, 62, 73, 120,151, 181, 183 und/oder 191 und/oder C.I. Pigment Violett 32, Diazoplgmenten, insbesondere C.I. Pigment Orange 16, 34, 44 und/oder 72 und/oder C.I. Pigment Gelb 12, 13, 14, 16, 17, 81, 106, 113, 126, 127, 155, 174, 176, 18 und/oder 188, Diazokondensationspigmenten, insbesondere C.I. Pigment Gelb 91, 95 und/oder 128 und/oder C.I. Pigment Rot 144, 166, 214, 220, 221, 242 und/oder 262 und/oder C.I. Pigment Braun 23 und/oder 41, Anthrachinonpigmenten, insbesondere C.I. Pigment Gelb 147, 177 und/oder 199 und/oder G.I. Pigment Violett 31, Anthrapyrimidinpigmenten, insbesondere C.I. Pigment Gelb 108, Chinacridonpigmenten, insbesondere C.I. Pigment Orange 48 und/oder 49 und/oder C.I. Pigment Rot 202, 206 und/oder 209 und/oder Diketopyrrolopyrrolpigmenten, insbesondere C.I. Pigment Orange 71 und/oder 81 und/oder C.I. Pigment Rot 270 und/oder 272. Dioxazinpigmenten, insbesondere C.I. Pigment Violett 37 und/oder C.I. Pigment Blau 80, Flavanthronpigmenten, insbesondere C.I. Pigment Gelb 24, Indanthronpigmenten, insbesondere C.I. Pigment Blau 60 und/oder 64, Isoindolinpigmenten, insbesondere C.I. Pigment Orange 61 und/oder 69 und/oder C.I. Pigment Rot 260 und/oder C.I. Pigment Gelb 185, Isoindolinonpigmenten, insbesondere C.I. Pigment Gelb 109, 139 und/oder 173, Isoviolanthronpigmenten, insbesondere C.I. Pigment Violett 31, Metallkomplexpigmenten, insbesondere C.I. Pigment Rot 257 und/oder C.I. Pigment Gelb 117, 129. 151, 153 und/oder 177und/oder C.I. Pigment Grün 8, Perinonpigmenten, insbesondere C.I. Pigment Orange 43, und/oder C.I, Pigment Rot 194, Perylenpigmenten, insbesondere C.I. Pigment Schwarz 31 und/oder C.I. Pigment Schwarz 32, C.I. Pigment Rot 123,149, 178, 179, 190 und/oder 224 und/oder C.I. Pigment Violett 29, Pyranthronpigmenten, insbesondere C.I. Pigment Orange 51 und/oder C.I. Pigment Rot 216, Pyrazolochinazolonpigmenten, insbesondere C.I. Pigment Rot 251. Thioindigopigmenten. insbesondere C.I. Pigment Rot 88 und/oder 181 und/oder C.I. Pigment Violett 38. Triarylcarboniumpigmenten, insbesondere C.I. Pigment Blau 1,61 und/oder 62 und/oder C.I. Pigment Grün 1 und/oder C.I. Pigment Rot 81, 81: 1 und/oder 169 und/oder C I. Pigment Violett 1,2, 3 und/oder 27.

Geeignete Pigmentmischungen können sowohl Mischungen aus anorganischen und organischen Pigmenten als auch Mischungen aus unterschiedlichen anorganischen Pigmenten sowie Mischungen aus unterschiedlichen organischen Pigmenten umfassen.

Besonders geeignete erfindungsgemäße wässrige Pigmentpasten können ferner mindestens ein Netz- und/oder Dispergiermittel (Komponente f)), insbesondere ausgewählt aus der Gruppe bestehend aus Maleinsäureanhydrid/Styrol-Copolymeren, Salzen von (Meth)acrylat(co)polymeren, insbesondere Natrium-, Kalium- oder Ammoniumsalze von Polyacrylsäuren, Polyetherphosphaten, insbesondere Polyalkylenglykoletherphosphat, und beliebigen Mischungen hiervon, enthalten. Unter den Netz- und/oder Dispergiermitteln wird besonders bevorzugt auf die Salze, insbesondere Natriumsalze, von Polyacrylsäuren zurückgegriffen.

Bevorzugte erfindungsgemäße wässrige Pigmentpasten können ferner zusätzlich mindestens ein Feuchthaltemittel (Komponente g)) enthalten. Als geeignete Feuchthaltemittel kommen Ethylenglykol, Propylenglykol, Diethylenglykol, Dipropylenglykol und/oder Polyalkylenglykole in Betracht, wobei Polyalkylenglykole wie Polyethylenglykole und Polypropylenglykole besonders bevorzugt sind.

Besonders geeignete erfindungsgemäße wässrige Pigmentpasten können ferner alternativ oder zusätzlich zu der vorangehend genannten Ausführungsform mindestens ein Rheologieadditiv (Komponente h)), insbesondere einen Verdicker, enthalten. Bevorzugt können Verdicker dabei ausgewählt werden aus der Gruppe bestehend aus Polyacrylat-Verdickern, Polyurethan-Verdickern, Polyharnstoff-Verdickern, Polyvinylalkohol-Verdickern, Polyetherpolyol-Verdickern, Polyvinylpyrrolidon-Verdicker, insbesondere Vinylpyrrolidon/Vinylacetat-Copolymer-Verdicker, Verdickern auf Basis von pyrogenem Siliciumdioxid (Aerosil-Verdicker), organisch modifizierten Schichtsilikat-Verdickern, nicht organisch modifizierten Schichtsilikat-Verdickern, Stärkeether-Verdickern, Celluloseether-Verdickern, insbesondere Hydroxyethylcellulose-Verdicker, Polysaccharid-Verdickern, bevorzugt Xanthan, und beliebigen Mischungen hiervon. Unter den Verdickern wird besonders bevorzugt auf Polysaccharid-Verdicker, bevorzugt Xanthan, organisch modifizierte Schichtsilikat-Verdicker oder nicht organisch modifizierte Schichtsilikat-Verdicker zurückgegriffen, wobei Polysaccharid-Verdicker, insbesondere Xanthan, besonders bevorzugt sind.

Besonders geeignete erfindungsgemäße wässrige Pigmentpasten können ferner alternativ oder zusätzlich zu einer der beiden vorangehend genannten Ausführungsform oder insbesondere zusätzlich zu den beiden vorangehend genannten Ausführungsformen (Komponenten g) und h)) mindestens einen Füllstoff enthalten (Komponente i)). Bevorzugt können Füllstoffe dabei ausgewählt werden aus der Gruppe bestehend aus silikatischen Füllstoffen, insbesondere Talk, Feldspat, Pyrophyllit, Serpentin, Kaolinit, Sulfaten, Flußspat und deren beliebigen Mischungen, wobei silikatische und/oder sulfatische Füllstoffe bevorzugt sind. Unter den Sulfaten ist Bariumsulfat bevorzugt, wobei Bariumsulfat mit einer mittleren Teilchengröße im Bereich von 1 bis 999 nm besonders bevorzugt ist.

Die erfindungsgemäßen wässrigen Pigmentpasten liegen als pastöse Massen vor. Unter einer pastösen Masse wird im Sinne der Erfindung in einer zweckmäßigen Ausführungsform ein Feststoff-Flüssigkeitsgemisch mit einer Konsistenz verstanden, die geeignet ist, an einer vertikalen Wandfläche gezielt verstrichen werden zu können.

Die erfindungsgemäßen Pigmentpasten sind insbesondere auch dann als pastöse Massen im Sinne der vorliegenden Erfindung anzusehen, wenn sie über eine Viskosität, bestimmt mit einem Rotationsviskosimeter gemäß DIN EN ISO 3219-2:2021-08, im Bereich von 10 bis 4.000 mPas, vorzugsweise im Bereich von 50 bis 1.500 mPas, besonders bevorzugt im Bereich von 60 bis 800 mPas, bestimmt bei einer Schergeschwindigkeit von 250 s-1 und einer Temperatur von 22 °C, verfügen.

Der Feststoffanteil liegt in den erfindungsgemäßen wässrigen Pigmentpasten bevorzugt oberhalb von 20 Gew.-%, bevorzugt oberhalb von 30 Gew.-% und besonders bevorzugt im Bereich von 40 bis 80 Gew.-%, jeweils bezogen auf das Gesamtgewicht der erfindungsgemäßen wässrigen Pigmentpasten. Zum Feststoffanteil tragen diejenigen Bestandteile der erfindungsgemäßen wässrigen Pigmentpaste bei, die bei 23 °C fest, d.h. als Feststoff vorliegen.

Die der Erfindung zugrunde liegende Aufgabe wird besonders zufriedenstellend und zuverlässig auch mit solchen erfindungsgemäßen wässrigen Pigmentpasten gelöst, die im Wesentlichen frei, insbesondere frei, von organischen Bindemitteln sind.

Für die Einstellung des pH-Wertes der erfindungsgemäßen wässrigen Pigmentpasten kann ein pH-Einstellmittel verwendet werden (Komponente e)), und zwar insbesondere auch dann, wenn durch die Anwesenheit der Komponenten b) und d) der pH-Wert der Pigmentpaste nicht bereits im Bereich von 4,0 bis 6,5 liegt. Das pH-Einstellmittel wird vorzugsweise ausgewählt aus der Gruppe bestehend aus Säuren mit einem pKs-Wert kleiner 7,0, bevorzugt kleiner 3,0 und besonders bevorzugt kleiner 2,0. Der pKs-Wert kann z.B. potentiometrisch bei 20 °C bestimmt werden nach Subirats, Xavier &Fuguet, Elisabet & Rosés, Marti &Bosch, Elisabeth &Räfols, Clara. (2015). Methods for pKa Determination (I): Potentiometry, Spectrophotometry, and Capillary Electrophoresis. 10.1016/B978-0-12-409547-2.11559-8. Das pH-Einstellmittel kann beispielsweise eine Mineralsäure, insbesondere Salzsäure, eine anorganische Säure, insbesondere Phosphorsäure oder eine Schwefel-oxo-Säure bzw. ein Salz einer Schwefel-oxo-Säure sein. Auch können Mischungen dieser Säuren eingesetzt werden. Solche Säuren sind als pH-Einstellmittel bevorzugt, die als Reinstoff bei Raumtemperatur in festem Aggregatzustand vorliegen. Für die erfindungsgemäßen wässrigen Beschichtungsstoffsysteme wird als pH-Einstellmittel bevorzugt auf Schwefel-oxo-Säuren bzw. den Salzen von Schwefel-oxo-Säuren, besonders bevorzugt auf Alkalihydrogensulfate, beispielsweise Kaliumhydrogensulfat, und/oder die Hydrate der Alkalihydrogensulfate, beispielsweise des Kaliumhydrogensulfats, zurückgegriffen.

Für die erfindungsgemäßen wässrigen Pigmentpasten besonders geeignete Additive können ausgewählt werden aus der Gruppe bestehend aus Entschäumern, Stabilisatoren, UV-Absorbern, Radikalfängern, und deren beliebigen Mischungen.

Die erfindungsgemäßen wässrigen Pigmentpasten zeichnen sich in zweckmäßigen Ausführungsformen insbesondere auch dadurch aus, dass sie im Wesentlichen frei, insbesondere frei, von Sorbinsäure, wasserlöslichen Salzen der Sorbinsäure, Benzoesäure, wasserlöslichen Salzen der Benzoesäure, wasserlöslichen Salzen der para-Hydroxybenzoesäure, Konservierungsmitteln auf Basis von Isothiazolinon, Formaldehyd, formaldehydabspaltenden Verbindungen und/oder, insbesondere und, Pyrithion-Verbindungen, sind, besonders bevorzugt frei von jeglichen Topfkonservierungsmitteln, insbesondere frei von jeglichen organischen Konservierungsmitteln. Alternativ oder insbesondere zusätzlich ist die erfindungsgemäße wässrige Pigmentpaste im Wesentlichen frei von, insbesondere frei von, Konservierungsmitteln, die als CMR-Stoffe im Sinne der Verordnung (EG) Nr. 1907/2006 (REACH-Verordnung) deklariert sind.

Die erfindungsgemäßen Beschichtungsmassen sind im Sinne der Erfindung als frei von organischen Konservierungsmitteln zu betrachten, wenn nach Maßgabe der "Vergabegrundlage für Umweltzeichen" der RAL gGmbH für "Emissionsarme Innenwandfarben DE-UZ 102" (Ausg. Januar 2019, Version 3) keine organischen Konservierungsmittel darin enthalten sind, und die erfindungsgemäßen Beschichtungsmassen sind im Sinne der Erfindung als im Wesentlichen frei von organischen Konservierungsmitteln zu betrachten, wenn nach Maßgabe der "Vergabegrundlage für Umweltzeichen" der RAL gGmbH für "Emissionsarme Innenwandfarben DE-UZ 102" (Ausg. Januar 2019, Version 3) darin, jeweils bezogen auf das individuelle Konservierungsmittel, nicht mehr als 2 ppm (einschließlich Formaldehyd) und in Bezug auf 5-Chloro-2-methyl-4-isothiazolin (CIT) weniger als 0,5 ppm sowie in Bezug auf Methylisothiazolinon (MIT) weniger als 1,5 ppm enthalten sind.

Die erfindungsgemäßen wässrigen Pigmentpasten zeichnen sich ferner in bevorzugten Ausführungsformen dadurch aus, dass sich deren pH-Wert in einem verschlossenen Behälter bei 40 °C über einen Zeitraum von mindestens 4 Wochen, bevorzugt mindestens 8 Wochen, besonders bevorzugt mindestens 12 Wochen, um nicht mehr als pH ± 1,0 ändert, bevorzugt um nicht mehr als pH ± 0,8 ändert und besonders bevorzugt um nicht mehr als pH ± 0,5 ändert.

Die erfindungsgemäßen wässrigen Pigmentpasten zeichnen sich in einer weiteren bevorzugten Ausführungsform dadurch aus, dass sich deren Viskosität in einem verschlossenen Behälter bei 40 °C über einen Zeitraum von mindestens 4 Wochen, bevorzugt mindestens 8 Wochen, besonders bevorzugt mindestens 12 Wochen, um nicht mehr als ± 250 mPas ändert, bevorzugt um nicht mehr als ± 200 mPas ändert und besonders bevorzugt um nicht mehr als ± 150 mPas ändert.

In bevorzugten Ausführungsformen enthalten die erfindungsgemäßen wässrigen Pigmentpasten
- 2 bis 80 Gew.-%, bevorzugt 5 bis 75 Gew.-% und besonders bevorzugt 10 bis 70 Gew.-% an dem mindestens einen Pigment (Komponente a),
- 0,01 bis 6 Gew.-%, bevorzugt 0,05 bis 5 Gew.-% und besonders bevorzugt 0,1 bis 4 Gew.%, an dem mindestens einen Hilfsstoff (Komponente b)) und/oder, insbesondere und,
- 5 bis 80 Gew.-%, bevorzugt 10 bis 70 Gew.-% und besonders bevorzugt 20 bis 60 Gew.-%, an Wasser (Komponente c)) sowie
- 0,0 bis 5 Gew.-%, bevorzugt 0,001 bis 4 Gew.-% und besonders bevorzugt 0,1 bis 3 Gew.-% an dem mindestens einen Additiv (Komponente d)),
- 0,0 bis 5 Gew.-%, bevorzugt 0,01 bis 3,5 Gew.-% und besonders bevorzugt 0,2 bis 1,0 Gew.-% an dem mindestens einen pH-Einstellmittel (Komponente e)),
- 0,0 bis 20 Gew.-%, bevorzugt 1 bis 15 Gew.-% und besonders bevorzugt 1,5 bis 12 Gew.-% an dem mindestens einen Netz- und/oder Dispergiermittel (Komponente f)),
- 0,0 bis 15 Gew.-%, bevorzugt 0,2 bis 12 Gew.-% und besonders bevorzugt 2 bis 10 Gew.-%, an dem mindestens einen Feuchthaltemittel (Komponente g)),
- 0,0 bis 4 Gew.-%, bevorzugt 0,01 bis 2 Gew.-% und besonders bevorzugt 0,1 bis 0,5 Gew.-%. an dem mindestens einen Rheologieadditiv, insbesondere einen Verdicker, (Komponente h)), und/oder, insbesondere und,
- 0 bis 80 Gew.-%, bevorzugt 0,001 bis 60 Gew.-% und besonders bevorzugt 0,01 bis 30 Gew.-% an dem mindestens einen Füllstoff (Komponente i)),
wobei die die wässrige Pigmentpaste bildenden Komponenten, einschließlich Wasser, sich stets zu 100,0 Gew.-% ergänzen.

Die der Erfindung zugrunde liegende Aufgabe wird des Weiteren gelöst durch ein Kit-of-parts Beschichtungssystem, enthaltend oder gebildet aus A) mindestens einer erfindungsgemäßen wässrigen Pigmentpaste und B) mindestens einer wässrigen Beschichtungsmasse. Hierbei kann die wässrige Beschichtungsmasse des erfindungsgemäßen Kit-of-parts Beschichtungssystems ausgewählt sein aus der Gruppe bestehend aus Farben, Lacken, Lasuren, Putzen, Grundierungen und Spachtelmassen oder die jeweilige Grundrezeptur für wässrige Farben, Lacke, Lasuren, Putze, Grundierungen oder Spachtelmassen darstellen.

Die der Erfindung zugrunde liegende Aufgabe wird des Weiteren gelöst durch ein abgetöntes wässriges Beschichtungsstoffsystem, erhalten oder erhältlich aus dem erfindungsgemäßen Kit-of-parts Beschichtungssystem durch Vermischen der erfindungsgemäßen wässrigen Pigmentpaste A) mit der wässrigen Beschichtungsmasse B).

Bei dem erfindungsgemäßen abgetönten wässrigen Beschichtungsstoffsystem kann es sich um eine Farbe, einen Lack, eine Lasur, einen Putz, eine Grundierung oder eine Spachtelmasse handeln.

Das erfindungsgemäße abgetönte wässrige Beschichtungsstoffsystem zeichnet sich in einer bevorzugten Ausführungsform auch dadurch aus, dass es im Wesentlichen frei, insbesondere frei, von Sorbinsäure, wasserlöslichen Salzen der Sorbinsäure, Benzoesäure, wasserlöslichen Salzen der Benzoesäure, wasserlöslichen Salzen der para-Hydroxybenzoesäure, Konservierungsmitteln auf Basis von Isothiazolinon, Formaldehyd, formaldehydabspaltenden Verbindungen und/oder, insbesondere und, Pyrithion-Verbindungen, ist, und besonders bevorzugt frei von jeglichen Topfkonservierungsmitteln, insbesondere frei von jeglichen organischen Konservierungsmitteln sein kann.

Die der Erfindung zugrunde liegende Aufgabe wird des Weiteren gelöst durch ein Verfahren zum Abtönen einer wässrigen Beschichtungsmasse, umfassend die Schritte
i) Zurverfügungstellung von mindestens einer erfindungsgemäßen wässrigen Pigmentpaste, vorzugsweise von mindestens zwei und besonders bevorzugt von mindestens drei erfindungsgemäßen wässrigen Pigmentpasten,
ii) Zurverfügungstellung von mindestens einer wässrigen Beschichtungsmasse, insbesondere ausgewählt aus der Gruppe bestehend aus Farben, Lacken, Lasuren, Putzen, Grundierungen, Spachtelmassen und den jeweiligen Grundrezepturen für wässrige Farben, Lacke, Lasuren, Putze, Grundierungen und Spachtelmassen, und
iii) Vermischen der Pigmentpaste gemäß i) und der Beschichtungsmasse gemäß ii) unter Erhalt eines erfindungsgemäßen abgetönten Beschichtungsstoffsystems.

Die erfindungsgemäßen wässrigen Pigmentpasten eignen sich zum Einfärben wasserbasierter Farben, Lacke, Lasuren, Putze, Grundierungen und/oder Spachtelmassen.

Die erfindungsgemäßen wässrigen Pigmentpasten können darüber hinaus zur Herstellung abgetönter wässriger Beschichtungsstoffsysteme eingesetzt werden.

Die erfindungsgemäßen wässrigen Beschichtungsstoffsysteme eignen sich für die Herstellung von oder als Innenfarbe, Fassadenfarbe, Spachtelmasse, Putz, Grundierung, Lack, Lasur oder Pigmentpaste oder als Bestandteil hiervon.

Des Weiteren wurde mit der vorliegenden Erfindung die Verwendung von Lävulinsäure, wasserlöslichen Salzen der Lävulinsäure, insbesondere Natriumlävulinat, Anissäure, wasserlöslichen Salzen der Anissäure, insbesondere Natriumanisat, Zimtsäure, wasserlöslichen Salzen der Zimtsäure, Kaffeesäure, wasserlöslichen Salzen der Kaffeesäure, 1,2-Propandiol, 1,3-Propandiol, 1,2-Pentandiol, 1,2-Hexandiol, 1,2-Octandiol, Mono- und Diestern, insbesondere Monoestern, des Glycerins mit gesättigten oder ungesättigten, insbesondere gesättigten, C6-bis C18-Fettsäuren, bevorzugt C8- bis C12-Fettsäuren, bevorzugt Capronsäure, Caprylsäure, Caprinsäure und/oder Laurinsäure, besonders bevorzugt Caprylsäure, wie Glycerolmonostearat, Glycerolmonopalmitat, Glycerolmonomyristat, Glycerolmonocaprylat oder Glycerolmonolaurat, insbesondere Glycerylmonocaprylat, Polyphenolen, insbesondere Honokiol, Propylhonokiol, Magnolol, Butylmagnolol, Obovatol, Gallussäure, Tannine, Epigallocatechin, Epigallocatechingallat, Catechol, Hinokiol, Thymol, Menthol, Eucalyptol, Geraniol, Carvacrol, Citral, Salicylsäuremethylester, Tocopherol, Extrakt der Rinde, Blüten und/oder Blätter des Magnolienbaumes, Glyceryl-Undecylenat, N-Hydroxyamiden von gesättigten oder ungesättigten, insbesondere gesättigten, C6- bis C18-Fettsäuren, insbesondere C8- bis C12-Fettsäuren, bevorzugt Capronsäure, Caprylsäure, Caprinsäure und/oder Laurinsäure, besonders bevorzugt Caprylsäure, wie Caprylhydroxamsäure (N-Hydroxyoctanamid), Caprinhydroxamsäure, Laurylhydroxamsäure, Palmitinhydxroxamsäure oder Stearylhydroxamsäure, insbesondere Caprylhydroxamsäure, 1-Phenyl-1-propanol, Dipropylenglycole, und beliebigen Mischungen der vorangehend genannten Verbindungen zur Erhöhung der Lagerstabilität, insbesondere pH-Wert-Stabilisierung und/oder Viskositätsstabilisierung, oder zur Verhinderung oder Reduzierung des mikrobiellen Befalls einer wässrigen Pigmentpaste, insbesondere einer erfindungsgemäßen wässrigen Pigmentpaste gefunden.

Mit der vorliegenden Erfindung geht die überraschende Erkenntnis einher, lagerstabile wässrige Pigmentpasten mit hautverträglichem pH-Wert durch gezielt ausgewählte Hilfsstoffe erhalten zu können, die sich durch eine sehr ausgeprägte pH-Stabilität auszeichnen, und zwar ohne auf ein organisches Konservierungsmittel angewiesen zu sein. Als ein weiterer Vorteil der erfindungsgemäßen wässrigen Pigmentpasten hat sich überraschend gezeigt, dass sich ein hinreichender Schutz gegen mikrobiellen Befall mit unter Umweltaspekten unbedenklichen Substanzen sicherstellen lässt. Auch bei längerem und häufigem Kontakt mit der Haut verursachen die erfindungsgemäßen wässrigen Pigmentpasten regelmäßig keine Hautreizungen. Von besonderem Vorteil ist auch, dass sie aufgrund ihrer Freiheit von herkömmlichen organischen Konservierungsmitteln auch von Personen genutzt werden können, die gegenüber diesen Stoffen allergisch reagieren. Sie bieten damit einen größtmöglichen Schutz sowohl für diejenigen Personen, die mit den erfindungsgemäßen wässrigen Pigmentpasten Beschichtungsstoffsysteme, beispielsweise für Wand- oder Deckenbeschichtungen, herstellen, als auch für Personen, die sich in Räumen aufhalten, deren Wände oder Decken mit diesen Beschichtungsstoffsystemen beschichtet worden sind. Von besonderem Vorteil ist auch, dass die erfindungsgemäßen Pigmentpasten abgetönte Beschichtungsstoffsysteme liefern, die sich einfach und unproblematisch verarbeiten bzw. applizieren lassen.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Wässrige Pigmentpaste, bestehend aus oder enthaltend, insbesondere enthaltend,
a) mindestens ein organisches und/oder anorganisches Pigment,
b) mindestens einen Hilfsstoff, ausgewählt aus der Gruppe bestehend aus Lävulinsäure, wasserlösliche Salzen der Lävulinsäure, insbesondere Natriumlävulinat,
Anissäure, wasserlöslichen Salzen der Anissäure, insbesondere Natriumanisat,
Zimtsäure, wasserlöslichen Salzen der Zimtsäure,
Kaffeesäure, wasserlöslichen Salzen der Kaffeesäure, 1,2-Propandiol, 1,2-Pentandiol, 1,2-Hexandiol, 1,2-Octandiol,
Mono- und Diestern, insbesondere Monoestern, des Glycerins mit gesättigten oder ungesättigten, insbesondere gesättigten, C6- bis C18-Fettsäuren, bevorzugt C8- bis C12-Fettsäuren, bevorzugt Capronsäure, Caprylsäure, Caprinsäure und/oder Laurinsäure, besonders bevorzugt Caprylsäure, wie Glycerolmonostearat, Glycerolmonopalmitat, Glycerolmonomyristat, Glycerolmonocaprylat oder Glycerolmonolaurat, insbesondere Glycerylmonocaprylat,
Polyphenolen, insbesondere Honokiol, Propylhonokiol, Magnolol, Butylmagnolol, Obovatol,
Gallussäure, Tannine, Epigallocatechin, Epigallocatechingallat, Catechol, Hinokiol, Thymol, Menthol, Eucalyptol, Geraniol, Carvacrol, Citral, Salicylsäuremethylester, Tocopherol, Extrakt der Rinde, Blüten und/oder Blätter des Magnolienbaumes,
Glyceryl-Undecylenat,
N-Hydroxyamiden von gesättigten oder ungesättigten, insbesondere gesättigten, C6- bis C18-Fettsäuren, insbesondere C8- bis C12-Fettsäuren, bevorzugt Capronsäure, Caprylsäure, Caprinsäure und/oder Laurinsäure, besonders bevorzugt Caprylsäure, wie Caprylhydroxamsäure (N-Hydroxyoctanamid), Caprinhydroxamsäure, Laurylhydroxamsäure, Palmitinhydxroxamsäure oder Stearylhydroxamsäure, insbesondere Caprylhydroxamsäure,
1-Phenyl-1-propanol, Dipropylenglycole und
beliebigen Mischungen der vorangehend genannten Verbindungen und
c) Wasser sowie
d) gegebenenfalls mindestens ein Additiv, ausgewählt aus der Gruppe bestehend aus Entschäumern, Stabilisatoren, UV-Absorbern, Radikalfängern und Mischungen dieser Verbindungen, und/oder, insbesondere und,
e) gegebenenfalls mindestens ein pH-Einstellmittel mit einem pKs kleiner 7,0, das kein Bestandteil der Komponenten b) und d) ist, bevorzugt Kaliumhydrogensulfat und/oder Natriumhydrogensulfat, besonders bevorzugt Kaliumhydrogensulfat,
wobei die wässrige Pigmentpaste einen pH-Wert, bestimmt mit einer pH-Elektrode gemäß DIN EN ISO 19396-1-1:2022-05 bei 23 ± 2 °C, im Bereich von 4,0 bis 6,5, bevorzugt im Bereich von 4,5 bis 6,0, aufweist oder auf einen pH-Wert im Bereich von 4,0 bis 6,5, bevorzugt im Bereich von 4,5 bis 6,0, eingestellt ist.

2. Wässrige Pigmentpaste nach Anspruch 1, ferner umfassend
f) mindestens ein Netz- und/oder Dispergiermittel, insbesondere ausgewählt aus der Gruppe bestehend aus Maleinsäureanhydrid/Styrol-Copolymeren, Salzen von (Meth)acrylat(co)polymeren, insbesondere Natrium-, Kaliumoder Ammoniumsalze von Polyacrylsäuren, Polyetherphosphaten, insbesondere Polyalkylenglykoletherphosphat, und beliebigen Mischungen hiervon,
g) mindestens ein Feuchthaltemittel, insbesondere Polyalkylenglykole, und/oder
h) mindestens ein Rheologieadditiv, insbesondere einen Verdicker, und/oder
i) mindestens einen Füllstoff.

3. Wässrige Pigmentpaste nach Anspruch 1 oder 2, **dadurch gekennzeichnet, dass** diese über eine Viskosität, bestimmt mit einem Rotationsviskosimeter gemäß DIN EN ISO 3219-2:2021-08 im Bereich von 10 bis 4.000 mPas, vorzugsweise im Bereich von 50 bis 1.500 mPas, besonders bevorzugt im Bereich von 60 bis 800 mPas, bestimmt bei einer Schergeschwindigkeit von 250 s-1 und einer Temperatur von 22 °C, verfügt.

4. Wässrige Pigmentpaste nach Anspruch 2 oder 3, **dadurch gekennzeichnet, dass** der Verdicker ausgewählt ist aus der Gruppe bestehend aus Polyacrylat-Verdickern, Polyurethan-Verdickern, Polyharnstoff-Verdickern, Polyvinylalkohol-Verdickern, Polyetherpolyol-Verdickern, organisch modifizierten Schichtsilikat-Verdickern, nicht organisch modifizierten Schichtsilikat-Verdickern, Stärkeether-Verdickern, Celluloseether-Verdickern, Polysaccharid-Verdickern, bevorzugt Xanthan, und beliebigen Mischungen hiervon.

5. Wässrige Pigmentpaste nach einem der vorangehenden Ansprüche, **dadurch gekennzeichnet, dass**
das mindestens eine Pigment ausgewählt ist aus der Gruppe bestehend aus anorganischen Pigmenten, insbesondere anorganischen Buntpigmenten, Schwarzpigmenten, Weißpigmenten und/oder Glanzpigmenten, organischen Pigmenten, insbesondere organischen Bunt- und/oder Schwarzpigmenten, und beliebigen Mischungen hiervon.

6. Wässrige Pigmentpaste nach einem der vorangehenden Ansprüche, **dadurch gekennzeichnet, dass**
diese im Wesentlichen frei, insbesondere frei, von Sorbinsäure, wasserlöslichen Salzen der Sorbinsäure, Benzoesäure, wasserlöslichen Salzen der Benzoesäure, wasserlöslichen Salzen der para-Hydroxybenzoesäure, Konservierungsmitteln auf Basis von Isothiazolinon, Formaldehyd, formaldehydabspaltenden Verbindungen und/oder, insbesondere und, Pyrithion-Verbindungen, ist, besonders bevorzugt frei von jeglichen Topfkonservierungsmitteln, insbesondere frei von jeglichen organischen Konservierungsmitteln.

7. Wässrige Pigmentpaste nach einem der vorangehenden Ansprüche, **dadurch gekennzeichnet, dass**
der pH-Wert der Pigmentpaste in einem verschlossenen Behälter bei 40 °C über einen Zeitraum von mindestens 4 Wochen, bevorzugt mindestens 8 Wochen, besonders bevorzugt mindestens 12 Wochen, sich um nicht mehr als pH ± 1,0 ändert, bevorzugt sich um nicht mehr als pH ± 0,8 ändert und besonders bevorzugt sich um nicht mehr als pH ± 0,5 ändert.

8. Wässrige Pigmentpaste nach einem der vorangehenden Ansprüche, **dadurch gekennzeichnet, dass**
die Viskosität der Pigmentpaste in einem verschlossenen Behälter bei 40 °C über einen Zeitraum von mindestens 4 Wochen, bevorzugt mindestens 8 Wochen, besonders bevorzugt mindestens 12 Wochen, sich um nicht mehr als ± 250 mPas ändert, bevorzugt sich um nicht mehr als ± 200 mPas ändert und besonders bevorzugt sich um nicht mehr als ± 150 mPas ändert.

9. Wässrige Pigmentpaste nach einem der vorangehenden Ansprüche, **dadurch gekennzeichnet, dass**
diese im Wesentlichen frei, insbesondere frei, ist von organischen Bindemitteln.

10. Wässrige Pigmentpaste nach einem der vorangehenden Ansprüche, enthaltend
- 2 bis 80 Gew.-%, bevorzugt 5 bis 75 Gew.-% und besonders bevorzugt 10 bis 70 Gew.-% an dem mindestens einen Pigment (Komponente a),
- 0,01 bis 6 Gew.-%, bevorzugt 0,05 bis 5 Gew.-% und besonders bevorzugt 0,1 bis 4 Gew.%, an dem mindestens einen Hilfsstoff (Komponente b)) und/oder, insbesondere und,
- 5 bis 80 Gew.-%, bevorzugt 10 bis 70 Gew.-% und besonders bevorzugt 20 bis 60 Gew.-%, an Wasser (Komponente c)) sowie
- 0,0 bis 5 Gew.-%, bevorzugt 0,001 bis 4 Gew.-% und besonders bevorzugt 0,1 bis 3 Gew.-% an dem mindestens einen Additiv (Komponente d)),
- 0,0 bis 5 Gew.-%, bevorzugt 0,01 bis 3,5 Gew.-% und besonders bevorzugt 0,2 bis 1,0 Gew.-% an dem mindestens einen pH-Einstellmittel (Komponente e)),
- 0,0 bis 20 Gew.-%, bevorzugt 1 bis 15 Gew.-% und besonders bevorzugt 1,5 bis 12 Gew.-% an dem mindestens einen Netz- und/oder Dispergiermittel (Komponente f)),
- 0,0 bis 15 Gew.-%, bevorzugt 0,2 bis 12 Gew.-% und besonders bevorzugt 2 bis 10 Gew.-%, an dem mindestens einen Feuchthaltemittel (Komponente g)),
- 0,0 bis 4 Gew.-%, bevorzugt 0,01 bis 2 Gew.-% und besonders bevorzugt 0,1 bis 0,5 Gew.-%. an dem mindestens einen Rheologieadditiv, insbesondere einen Verdicker, (Komponente h)), und/oder, insbesondere und,
- 0 bis 80 Gew.-%, bevorzugt 0,001 bis 60 Gew.-% und besonders bevorzugt 0,01 bis 30 Gew.-% an dem mindestens einen Füllstoff (Komponente i)),
wobei die die wässrige Pigmentpaste bildenden Komponenten sich stets zu 100,0 Gew.-% ergänzen.

11. Kit-of-parts Beschichtungssystem, enthaltend oder gebildet aus
A) mindestens einer wässrigen Pigmentpaste nach einem der vorangehenden Ansprüche und
B) mindestens einer wässrigen Beschichtungsmasse.

12. Kit-of-parts Beschichtungssystem nach Anspruch 11, **dadurch gekennzeichnet, dass** die Beschichtungsmasse ausgewählt ist aus der Gruppe bestehend aus Farben, Lacken, Lasuren, Putzen, Grundierungen und Spachtelmassen oder die jeweilige Grundrezeptur für wässrige Farben, Lacke, Lasuren, Putze, Grundierungen oder Spachtelmassen darstellt.

13. Abgetöntes wässriges Beschichtungsstoffsystem, erhältlich aus dem Kit-of-parts Beschichtungssystem nach Anspruch 11 oder 12 durch Vermischen der wässrigen Pigmentpaste A) mit der wässrigen Beschichtungsmasse B).

14. Abgetöntes wässriges Beschichtungsstoffsystem nach Anspruch 13, **dadurch gekennzeichnet, dass**
dieses eine Farbe, einen Lack, eine Lasur, einen Putz, eine Grundierung oder eine Spachtelmasse darstellt.

15. Abgetöntes wässriges Beschichtungsstoffsystem nach Anspruch 13 oder 14, **dadurch gekennzeichnet, dass**
dieses im Wesentlichen frei, insbesondere frei, von Sorbinsäure, wasserlöslichen Salzen der Sorbinsäure, Benzoesäure, wasserlöslichen Salzen der Benzoesäure, wasserlöslichen Salzen der para-Hydroxybenzoesäure, Konservierungsmitteln auf Basis von Isothiazolinon, Formaldehyd, formaldehydabspaltenden Verbindungen und/oder, insbesondere und, Pyrithion-Verbindungen, ist, besonders bevorzugt frei von jeglichen Topfkonservierungsmitteln, insbesondere frei von jeglichen organischen Konservierungsmitteln.

16. Verfahren zum Abtönen einer wässrigen Beschichtungsmasse, umfassend die Schritte
i) Zurverfügungstellung von mindestens einer wässrigen Pigmentpaste, vorzugsweise von mindestens zwei und besonders bevorzugt von mindestens drei wässrigen Pigmentpasten, gemäß einem oder mehreren der Ansprüche 1 bis 10,
ii) Zurverfügungstellung von mindestens einer wässrigen Beschichtungsmasse, insbesondere ausgewählt aus der Gruppe bestehend aus Farben, Lacken, Lasuren, Putzen, Grundierungen, Spachtelmassen und den jeweiligen Grundrezepturen für wässrige Farben, Lacke, Lasuren, Putze, Grundierungen und Spachtelmassen, und
iii) Vermischen der Pigmentpaste gemäß i) und der Beschichtungsmasse gemäß ii) unter Erhalt eines abgetönten Beschichtungsstoffsystems nach einem der Ansprüche 13 bis 15.

17. Verwendung der wässrigen Pigmentpaste nach einem der Ansprüche 1 bis 10 zum Einfärben wasserbasierter Farben, Lacke, Lasuren, Putze, Grundierungen und/oder Spachtelmassen.

18. Verwendung der wässrigen Pigmentpaste nach einem der Ansprüche 1 bis 10 zur Herstellung abgetönter wässriger Beschichtungsstoffsysteme.

19. Verwendung des wässrigen Beschichtungsstoffsystems nach einem der Ansprüche 13 bis 15 für die Herstellung von oder als Innenfarbe, Fassadenfarbe, Spachtelmasse, Putz, Grundierung, Lack, Lasur oder Pigmentpaste oder als Bestandteil hiervon.

20. Verwendung von Lävulinsäure, wasserlöslichen Salzen der Lävulinsäure, insbesondere Natriumlävulinat,
Anissäure, wasserlöslichen Salzen der Anissäure, insbesondere Natriumanisat, Zimtsäure, wasserlöslichen Salzen der Zimtsäure,
Kaffeesäure, wasserlöslichen Salzen der Kaffeesäure,
1,2-Propandiol, 1,3-Propandiol, 1,2-Pentandiol, 1,2-Hexandiol, 1,2-Octandiol, Mono- und Diestern, insbesondere Monoestern, des Glycerins mit gesättigten oder ungesättigten, insbesondere gesättigten, C6- bis C18-Fettsäuren, bevorzugt C8- bis C12-Fettsäuren, bevorzugt Capronsäure, Caprylsäure, Caprinsäure und/oder Laurinsäure, besonders bevorzugt Caprylsäure, wie Glycerolmonostearat, Glycerolmonopalmitat, Glycerolmonomyristat, Glycerolmonocaprylat oder Glycerolmonolaurat, insbesondere Glycerylmonocaprylat, Polyphenolen, insbesondere Honokiol, Propylhonokiol, Magnolol, Butylmagnolol, Obovatol,
Gallussäure, Tannine, Epigallocatechin, Epigallocatechingallat, Catechol, Hinokiol, Thymol, Menthol, Eucalyptol, Geraniol, Carvacrol, Citral, Salicylsäuremethylester, Tocopherol, Extrakt der Rinde, Blüten und/oder Blätter des Magnolienbaumes, Glyceryl-Undecylenat,
N-Hydroxyamiden von gesättigten oder ungesättigten, insbesondere gesättigten, C6- bis C18-Fettsäuren, insbesondere C8- bis C12-Fettsäuren, bevorzugt Capronsäure, Caprylsäure, Caprinsäure und/oder Laurinsäure, besonders bevorzugt Caprylsäure, wie Caprylhydroxamsäure (N-Hydroxyoctanamid), Caprinhydroxamsäure, Laurylhydroxamsäure, Palmitinhydxroxamsäure oder Stearylhydroxamsäure, insbesondere Caprylhydroxamsäure, 1-Phenyl-1-propanol, Dipropylenglycole, und beliebigen Mischungen der vorangehend genannten Verbindungen
zur Erhöhung der Lagerstabilität, insbesondere pH-Wert-Stabilisierung, oder zur Verhinderung oder Reduzierung des mikrobiellen Befalls einer wässrigen Pigmentpaste, insbesondere einer Pigmentpaste nach einem der Ansprüche 1 bis 10.
